# EUROPEAN PATENT APPLICATION

(11) **EP 2 682 810 A1**
(43) Date of publication of application: **08.01.2014**
(21) Application number: 13151833.4
(22) Date of filing: 18.01.2013
(51) Int. Cl.: G02F 1/13, G02F 1/1337, G02F 1/1343, G02F 1/29, H04N 13/04, G02F 1/139, G02F 1/1347

(54) **Liquid crystal Fresnel lens and image display apparatus**

(30) Priority: 06.07.2012 JP 2012152756
(71) Applicant: Kabushiki Kaisha Toshiba, Tokyo 105-8001 (JP)
(72) Inventor: Momonoi, Yoshiharu, Tokyo 105-8001 (JP); Takagi, Ayako, Tokyo 105-8001 (JP); Uehara, Shinichi, Tokyo 105-8001 (JP); Kashiwagi, Masako, Tokyo 105-8001 (JP)
(74) Representative: HOFFMANN EITLE

(57) **Abstract**

A liquid crystal optical element according to an embodiment includes: a first substrate; a pair of first electrodes being provided onto a first surface of the first substrate, extending in a first direction, and being arranged in a second direction perpendicular to the first direction; a pair of second electrodes being provided between the pair of first electrodes on the first surface, extending in the first direction, and being arranged in the second direction; a second substrate having a second surface facing the first surface of the first substrate; a counter electrode being provided onto the second surface of the second substrate, and having first notch portions in regions corresponding to at least one of the pair of first electrodes and the pair of second electrodes, the first notch portions extending in the first direction; and a liquid crystal layer provided between the first substrate and the second substrate.

## Description

### FIELD

The embodiments described herein relate generally to a liquid crystal optical element and an image display apparatus.

### BACKGROUND

A liquid crystal optical element is known, which uses the birefringence of liquid crystal molecules to change the distribution of refractive index in accordance with the application of voltage. Furthermore, there is a stereoscopic image display apparatus obtained by combining such a liquid crystal optical element and an image display unit.

In such a stereoscopic image display apparatus, the state in which an image displayed on the image display unit enters the eyes of a viewer as it is, and the state in which the image displayed on the image display unit enters the eyes of the viewer as a plurality of parallax images are switched by changing the refractive index distribution of the liquid crystal optical element. In this manner, a two-dimensional image display operation and a three-dimensional image display operation can be performed. A technique of changing a light path using an optical principle of Fresnel zone plate is also known. There is a demand for such a display apparatus with a high display quality.

### BRIEF DESCRIPTION OF THE DRAWINGS

FIG. 1 is a cross-sectional view showing a liquid crystal optical element according to a first embodiment.
FIG. 2 is a block diagram showing an image display apparatus including the liquid crystal optical element according to the first embodiment.
FIG. 3 is a drawing for explaining the effect of the liquid crystal optical element according to the first embodiment.
FIG. 4 is an enlarged cross-sectional view of the liquid crystal optical element according to the first embodiment, near a Fresnel electrode.
FIG. 5 is a drawing for explaining a preferable range of a notch portion of the liquid crystal optical element according to the first embodiment.
FIG. 6 is a cross-sectional view showing a liquid crystal optical element according to a second embodiment.
FIG. 7 is an enlarged cross-sectional view of the liquid crystal optical element according to the second embodiment, near a lens end electrode.
FIG. 8 is a cross-sectional view showing a liquid crystal optical element according to a third embodiment.
FIG. 9 is a cross-sectional view showing a liquid crystal optical element according to a fourth embodiment.

### DETAILED DESCRIPTION

A liquid crystal optical element according to an embodiment includes: a first substrate; a pair of first electrodes being provided onto a first surface of the first substrate, extending in a first direction, and being arranged in a second direction that is perpendicular to the first direction; a pair of second electrodes being provided between the pair of first electrodes on the first surface, extending in the first direction, and being arranged in the second direction; a second substrate having a second surface facing the first surface of the first substrate; a counter electrode being provided onto the second surface of the second substrate, and having first notch portions in regions corresponding to at least one of the pair of first electrodes and the pair of second electrodes, the first notch portions extending in the first direction; and a liquid crystal layer provided between the first substrate and the second substrate.

Hereinafter, embodiments will be described with reference to the accompanying drawings.

### (First Embodiment)

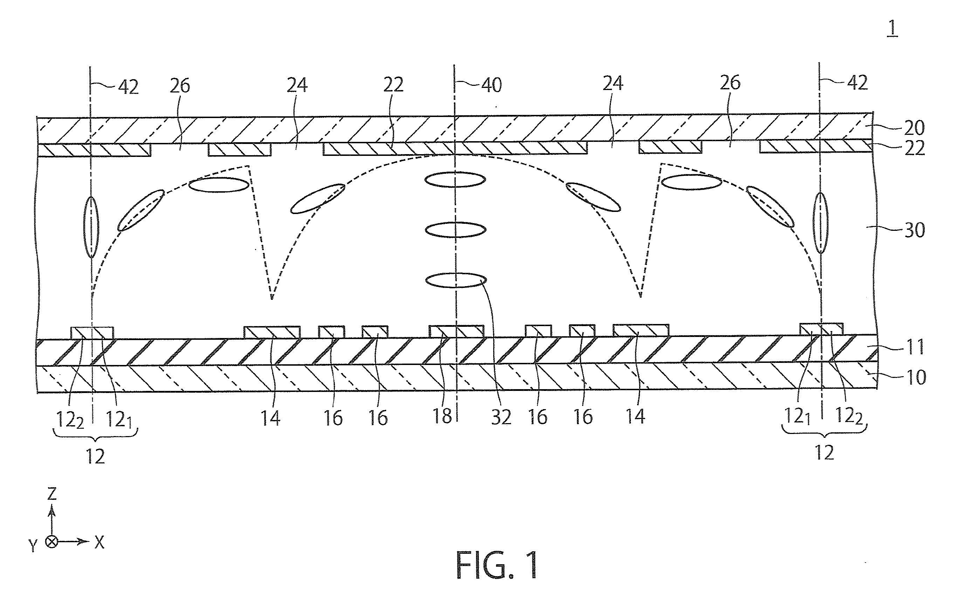

FIG. 1 shows a cross section of a liquid crystal optical element according to a first embodiment, which includes a first substrate 10, a second substrate 20 arranged to face the first substrate 10, and a liquid crystal layer 30 sandwiched between the first substrate 10 and the second substrate 20, and which functions as a liquid crystal GRIN (Gradient Index) lens in which the refractive index changes in its plane.

An insulating layer 11 is provided onto a surface of the first substrate 10 facing the second substrate 20. Onto the insulating layer 11, a plurality of first electrodes 12, a plurality of second electrodes 14, a plurality of third electrodes 16, and a plurality of fourth electrodes 18 are provided. Incidentally, the first to the fourth electrodes 12, 14, 16, and 18 can be directly provided onto the surface of the first substrate 10 facing the second substrate 20 without providing the insulating layer 11. The first to the fourth electrodes 12, 14, 16, and 18 are arranged to extend in the Y direction shown in FIG. 1.

A pair of first electrodes 12, which are adjacent to each other, is arranged at positions corresponding to ends of a Fresnel lens, and serve as common electrodes for adjacent Fresnel lenses. That is, each first electrode 12 is divided into two by an lens end central axis 42, one half 12₁ serving as an lens end electrode of the corresponding Fresnel lens, and the other half 12₂ serving as a lens end electrode of a Fresnel lens adjacent to the corresponding Fresnel lens. At the central position in the X direction of the pair of first electrodes 12, a central axis corresponding to the lens center of the Fresnel lens (hereinafter also referred to as the "lens center") 40 is present. One of the fourth electrodes 18 is located on the lens center 40. That is, the fourth electrode 18 serves as a central electrode for the corresponding Fresnel lens. As will be described later, the voltage of the central electrode 18 is set to be at a reference voltage (GND). Accordingly, the central electrode 18 is not necessarily provided.

The second electrodes 14 are provided between the pair of first electrodes 12 at positions corresponding to discontinuous points of the Fresnel lens so as to be axisymmetric relative to the lens center 40. The second electrodes 14 are also called "Fresnel electrodes."

The third electrodes 16 are arranged at positions corresponding to a lens surface of the Fresnel lens so as to be axisymmetric relative to the lens center 40. The third electrodes 16 are also called "auxiliary electrodes."

Onto a surface of the second substrate 20 facing the first substrate 10, a fifth electrode 22 is provided. The fifth electrode 22 is arranged on the entire surface of the second substrate 20 facing the first substrate 10. The fifth electrode 22 is also called "counter electrode."

In this embodiment, notch portions 24 are provided in regions of the fifth electrode 22 facing the Fresnel electrodes 14. The side of each notch portion 24, which is the closest to the lens end central axis 42 (i.e., the outer side) is located immediately above the corresponding Fresnel electrode 14. The detailed positions and the effect of the notch portions 24 will be described later. Like the Fresnel electrodes 14, the notch portions 24 extend in the Y direction.

Furthermore, notch portions 26 are provided in regions of the fifth electrode 22 facing regions outside of the Fresnel electrodes 14, i.e., regions each being between one of the lens end electrodes 12 and one of the Fresnel lens 14. A pair of a notch portion 26 and a corresponding Fresnel lens 14 form a maximum point and a minimum point of the refractive index of the Fresnel lens, and make the change from the minimum point to the maximum point sharp. The notch portions 26 also extend in the Y direction.

The first substrate 10, the first to the fourth electrodes 12, 14, 16, and 18, the second substrate 20, and the counter electrode 22 are permeable to light, i.e., transparent.

The first substrate 10 and the second substrate 20 are formed of a transparent material such as glass, a resin, etc. The first substrate 10 and the second substrate 20 are in a form of a plate or sheet, having a thickness of, for example, 50 micrometers (µm) or more, and 2000 µm or less. The thickness can be arbitrarily determined.

The first to the fourth electrodes 12, 14, 16, and 18 and the counter electrode 22 contain an oxide containing at least one (type of) element selected from the group consisting of, for example, In, Sn, Zn, and Ti. For example, ITO can be used to form these electrodes. For example, at least one of In₂O₃ and SnO₃ can be used. The thicknesses of these electrodes are set so that, for example, a high transmissivity can be obtained for a visible light.

The pitch of the first electrodes 12 is set so as to compatible with a desired specification (characteristics of a lens of refractive index distribution type).

The liquid crystal layer 30 contains a liquid crystal material, i.e., Nematic liquid crystal (which is in a Nematic phase at a temperature at which the liquid crystal optical element 1 is used). The liquid crystal material has a positive or negative dielectric anisotropy. In the case of the positive dielectric anisotropy, the initial alignment of the liquid crystal in the liquid crystal layer 30 (alignment in the state where no voltage is applied to the liquid crystal layer 30) is, for example, substantially horizontal alignment. In the case of the negative dielectric anisotropy, the initial alignment of the liquid crystal layer 30 is substantially vertical alignment.

Herein, with respect to the horizontal alignment, the angle between the director of liquid crystal (long axes of liquid crystal molecules 32) and the X - Y plane (pretilt angle) is 0° or more and 30° or less. With respect to the vertical alignment, for example, the pretilt angle is 60° or more and 90° or less. At least in one of the initial alignment and the alignment when a voltage is applied, the director of liquid crystal has a component parallel to the X axis.

Hereinafter, the case where the liquid crystal contained in the liquid crystal layer 30 has a positive dielectric anisotropy, and the initial alignment is a substantially horizontal alignment will be described.

In the case of substantially horizontal alignment, when a projection is performed onto the X - Y plane in the initial alignment, the director is substantially parallel to the X axis. For example, when projection is performed onto the X - Y plane, the (absolute value of the) angle between the director and the X axis direction is 15° or less. The alignment in the liquid crystal layer 30 near the first substrate 10 is antiparallel to the alignment in the liquid crystal layer 30 near the second substrate 20. That is, the initial alignment is not the splay alignment,

An alignment film (not shown in the drawings) can also be provided onto the first substrate 10. In such a case, the first to the fourth electrodes 12, 14, 16, and 18 are arranged between the alignment film and the first substrate 10. A further alignment film (not shown in the drawings) can also be provided onto the second substrate 20. In such a case, the counter electrode 22 is arranged between the further alignment film and the second substrate 20. These alignment films may be formed of, for example, a polyimide. The initial alignment of the liquid crystal layer 30 can be obtained by performing, for example, a rubbing process on the alignment films. The direction of the rubbing process performed on the alignment film provided onto the first substrate 10 is antiparallel to the direction of the rubbing process performed on the alignment film provided onto the second substrate 20. The initial alignment can also be obtained by performing a light emitting process onto the alignment films.

The alignment of the liquid crystal in the liquid crystal layer 30 is changed by applying a voltage between the first electrodes 12 and the counter electrode 22, and between the second and the third electrodes 14 and 16 and the counter electrode 22. Due to this change, a refractive index distribution is formed in the liquid crystal layer 30, thereby changing the direction along which light incident on the liquid crystal optical element 1 moves. This change in moving direction of light is mainly caused by a refractive effect.

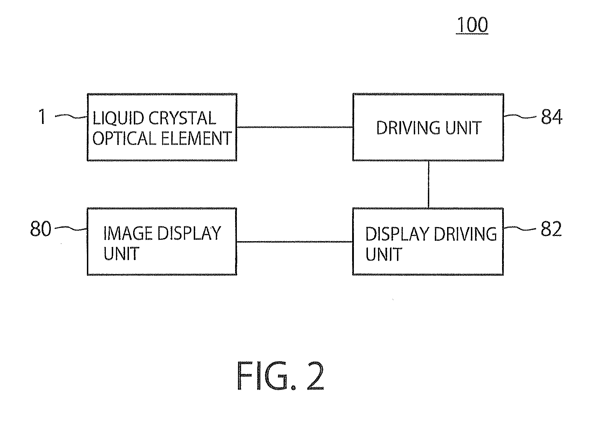

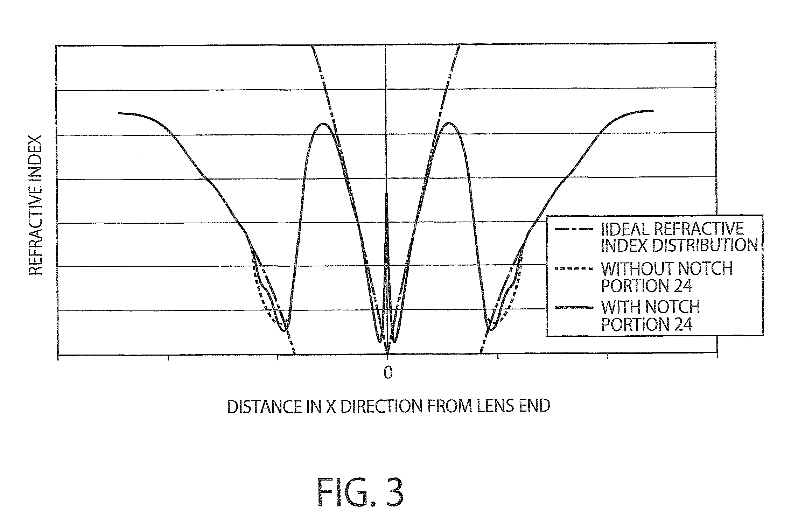

Next, the characteristics of the liquid crystal optical element 1 according to this embodiment will be described with reference to FIGs. 2 and 3. The liquid crystal optical element 1 according to this embodiment is used for an image display apparatus 100, which includes the liquid crystal optical element 1 according to this embodiment, an image display unit 80, a display driving unit 82 for driving the image display unit 80, and a driving unit 84 for driving the liquid crystal optical element 1, as shown in FIG. 2.

An arbitrarily selected display device can be used as the image display unit 80. For example, a liquid crystal display device, organic EL display device, or plasma display device can be used.

The liquid crystal optical element 1 is stacked on the image display unit 80. The first substrate 10 of the liquid crystal optical element 1 is arranged on the side of the image display unit 80, and the second substrate 20 is arranged so as to be more distant from the image display unit 80 than the first substrate 10. The image display unit 80 causes light containing image information to be incident on the liquid crystal layer 30, generates light modulated in accordance with a signal supplied form the display driving unit 82, and emits light including, for example, a plurality of parallax images. As will be described layer, the liquid crystal optical element 1 has an operation state for changing a light path and an operation state for not substantially changing a light path. When light is incident on the liquid crystal optical element 1 in the state of changing a light path, the image display apparatus 100 supplies, for example, a three-dimensional image display. Furthermore, for example, in the operation state of not substantially changing a light path, the image display apparatus 100 supplies, for example, a two-dimensional image display.

The driving unit 84 can be connected to the display driving unit 82 in either a wired or wireless manner (by an electric method or optical method). Furthermore, the image display apparatus 100 can further include a control unit (not shown in the drawings) for controlling the driving unit 84 and the display driving unit 82.

The driving unit 84 is electrically connected to the first to the fourth electrodes 12, 14, 16, and 18 and the counter electrode 22. The driving unit 84 applies a first voltage between each first electrode 12 and the counter electrode 22, applies a second voltage between each of the second and the third electrodes 14 and 16 and the counter electrode, and applies a reference voltage (GND) between each fourth electrode 18 and the counter electrode 22. For the purpose of convenience, in this specification, the state where the potentials of two electrodes are caused to be the same (i.e., the state of zero volts) is included in the case of applying a voltage.

The refractive index difference of a lens is the lowest at the lens ends. Accordingly, in many cases, the first voltage to be applied to each lens end electrode 12 is set to be high. If the thickness of the lens layer becomes thinner, in order to obtain the lens performance, discontinuous points are created as in a Fresnel lens, and the function of lens can be obtained by the gradient of refractive index difference. In many cases, the voltage to be applied to each lens end electrode 12 differs from the voltage to be applied to each electrode at a discontinuous point (Fresnel electrode) 14. If the refractive index distribution from a discontinuous point to the lens center does not match the lens curve, it is possible to control the refractive index distribution by the auxiliary electrodes 16.

The first voltage and the second voltage can be either DC voltage or AC voltage. The polarities of the first voltage and the second voltage can be changed periodically, for example. For example, the potential of the counter electrode 22 can be fixed, and the potential of each first electrode 12 can be changed by an alternating current. Alternatively, the polarity of the potential of the counter electrode 22 can be periodically changed, and in accordance wit the change in polarity, the potential of each first electrode 12 can be changed in the reverse polarity, i.e., common inversion driving can be performed. In this manner, it is possible to decrease the power supply voltage of the driving circuit, thereby easing the withstand voltage specification of the driving IC.

In a case where the pretilt angle of the liquid crystal layer 30 is relatively small (for example, 10° or less), the threshold voltage Vth relating to the change in liquid crystal alignment of the liquid crystal layer 30 is relatively clear. In such a case, for example, the first voltage and the second voltage are set to be greater than the threshold voltage Vth. By applying a voltage, the liquid crystal alignment in the liquid crystal layer 30 is changed, and based on this change, a refractive index distribution is formed. The refractive index distribution is determined by the arrangement of the electrodes and the voltages to be applied to the electrodes.

Next, the effect of providing a notch portion 24 in a region of the counter electrode 22 facing each second electrode (Fresnel electrode) as in this embodiment will be described. For the simplification of the explanation, a liquid crystal optical element obtained by excluding the third and the fourth electrodes from the liquid crystal optical element 1 of this embodiment will be considered as an example. A first voltage is applied to each first electrode 12 of the liquid crystal optical element of this example, a second voltage is applied to each second electrode 14, and a reference voltage (GND) is applied to the counter electrode 22. FIG. 3 shows, by the solid line, the refractive index distribution of the liquid crystal layer 30 in this state, in which the lens end central axis 42 of the liquid crystal optical element is the point of origin, the distance in the X direction from the lens end central axis 42 is on the horizontal axis, and the refractive index is on the vertical axis. An ideal refractive index distribution of the liquid crystal layer 30 is shown by the alternate long and short dash line in FIG. 3, and a refractive index distribution of the liquid crystal layer of the liquid crystal optical element in a comparative example is shown by a broken line. This comparative example has the same structure as the liquid crystal optical element of the above example except that there is no notch portion 24 in the counter electrode 22.

As can be understood from FIG. 3, the potential difference changes from the lens end toward the lens center, and a discontinuous point is created in the refractive index distribution by the Fresnel electrode. By providing a potion (notch) 26 to a position where there is no electrode in the counter electrode, the position being slightly to the lens end relative to the position immediately above the Fresnel electrode, as shown in FIG. 1, it is possible to improve the refractive index difference at a peak portion of a discontinuous point. The reason therefor is that the potential of the notch portion 26 is closer to the voltage on the side of the first substrate 10 than the voltage of the counter electrode, thereby decreasing the potential difference between the first substrate 10 and the counter electrode.

However, it often happens that the valley of a discontinuous point in a refractive index distribution (a phase difference distribution) gradually sinks as in the comparative example shown in FIG. 3. In such a case, it is not possible to obtain a lens characteristic close to that of the ideal refractive index distribution. In order to solve this, by providing a notch portion 24 to part of the counter electrode 22 slightly to the side of the lens center relative to the Fresnel electrode 14 as in this embodiment, it is possible to modify the shape of the valley at the discontinuous point so as to be sharper as shown in FIG. 3.

In more detail, it is possible to increase the potential difference between the Fresnel electrode 14 and the counter electrode 22 by increasing the electrode width of the Fresnel electrode 14, thereby obtaining a lens with a deep valley and high performance. However, if the width of the electrode is increased, the width of the portion in which the liquid crystal molecules rise is increased, thereby creating a depression in the refractive index distribution (the phase difference distribution). In order to solve this, a notch portion 24 is provided to a position slightly to the center side relative to the portion immediately above the Fresnel electrode 14 in the counter electrode 22, resulting in that the potential difference between the Fresnel electrode 14 and the notch portion 24 is decreased than that between the Fresnel electrode 14 and the counter electrode 22, thereby providing a bias to the electric field distribution. As a result, it is possible to make the valley of the refractive index distribution sharper.

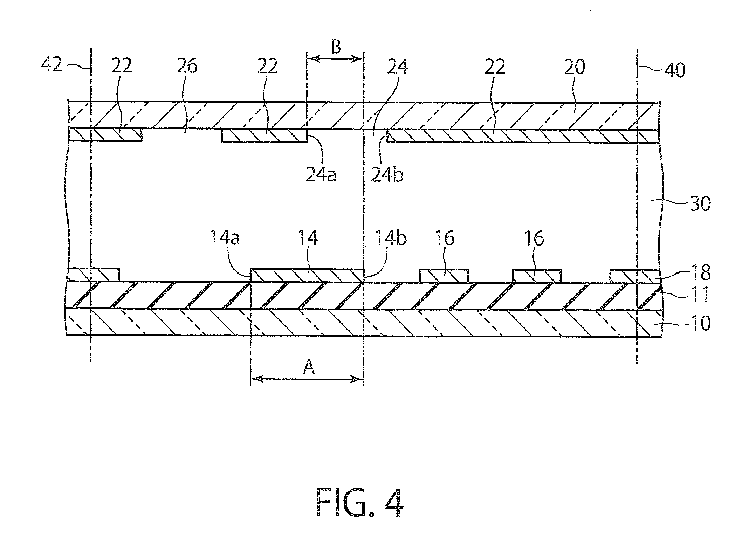

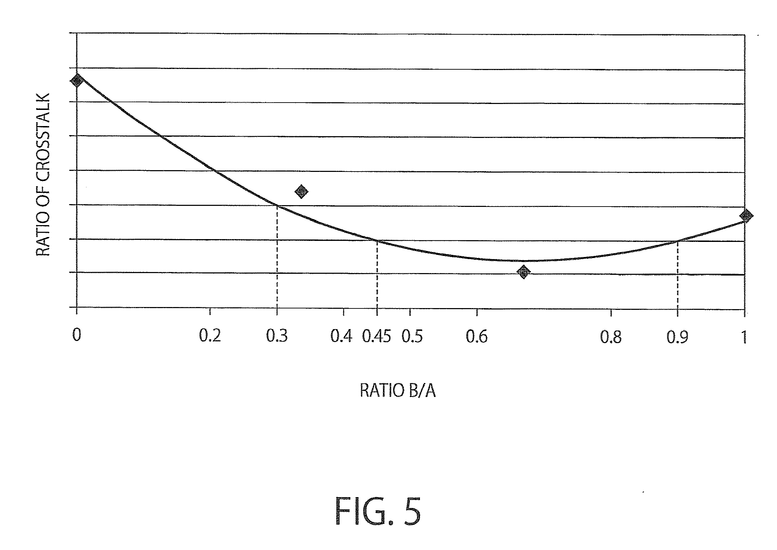

Next, the position of the notch portion 24 will be described in detail with reference to FIGs. 4 and 5. FIG. 4 is an enlarged view of the positional relationship between a notch portion 24 and a corresponding Fresnel electrode 14. When projected onto the X - Y plane, a side surface 24a of the notch portion 24, which is the closest to the lens end central axis 42, is located above the Fresnel electrode 14, and a side surface 24b of the notch portion 24, which is the closest to the lens center 40, is aligned with a side surface 14b of the Fresnel electrode 14, which is the closest to the lens center 40, or is positioned to the lens center 40 side relative to the side surface 14b. The width of the Fresnel electrode 14 in the X direction is "A." That is, the distance in the X direction between the side surface 14a of the Fresnel electrode 14, which is the closest to the lens end central axis 42 and the side surface 14b of the Fresnel electrode 14, which is the closest to the lens center 40 is "A." The distance in the X direction between the side surface 24a of the notch portion 24, which is the closest to the lens end central axis 42, and a point of the notch portion 24 corresponding to the side surface 14b of the Fresnel electrode 14 is "B." As will be described later, it is preferable that the side surface 24a of the notch portion 24 is positioned so that the ratio B/A is 0.3 - 1.0. It is more preferable that the side surface 24a is positioned so that the ratio is 0.45 - 0.9. The ratio B/A represents the ratio of the portion of the notch portion 24 overlapping the Fresnel electrode 14 to the width of the Fresnel lens 14 when it is projected onto the X - Y plane.

FIG. 5 shows a result of the measurement of the ratio of crosstalk appearing in the image display apparatus shown in FIG. 2, when the ratio of the overlapping portion of the notch portion 24 to the corresponding Fresnel electrode 14 is changed in the liquid crystal optical element 1 according to this embodiment. The ratio of crosstalk is an indicator indicating the degree by which the luminance of a parallax is mixed with the luminance to be measured at an angle of the center of the target parallax. In Fig. 5, the less the value is, the higher the performance is. As can be understood from FIG. 5, if the ratio B/A is 0.3 - 1.0, the ratio of crosstalk is low, and if the ratio B/A is 0.45 - 0.9, the ratio of crosstalk is lower.

As described above, according to the first embodiment, by providing a notch portion in a region of the counter electrode corresponding to a Fresnel electrode, it is possible to make the shape of the valley at the discontinuous point of the refractive index distribution sharper, thereby obtaining a liquid crystal optical element and an image display apparatus that can provide a high quality display.

### (Second Embodiment)

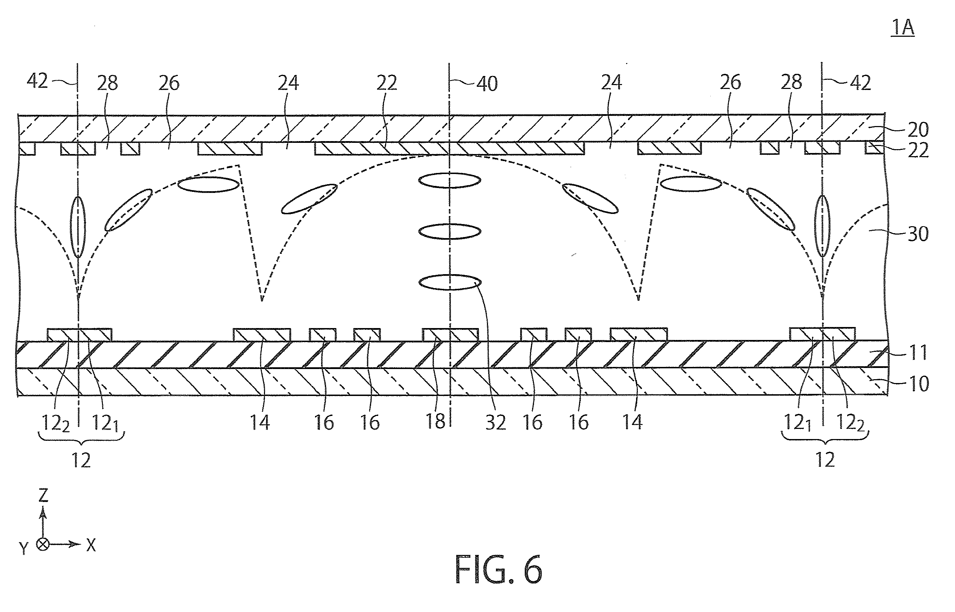

FIG. 6 shows a cross section of a liquid crystal optical element 1A according to a second embodiment. In the liquid crystal optical element 1A according to the second embodiment, a notch portion 28 is provided to a region of the counter electrode 22 corresponding to the lens end electrode 12 in the liquid crystal optical element 1 according to the first embodiment shown in FIG. 1.

Each lens end axis center 42 indicates an end of a Fresnel lens. At such a portion, the liquid crystal should be laid to make the refractive index the lowest. For this purpose, it is desired that the voltage between the lens end electrode 12 and the counter electrode 22 is set to be high, and the electrode width of the lens end electrodes 12 is wide. However, as in the case of the Fresnel electrodes 14, if the electrode width is increased, the refractive index distribution (phase difference distribution) is depressed, resulting in that it is not possible to achieve an ideal sharp distribution. In order to solve this, a notch portion 28 is provided to a region of the counter electrode 22 corresponding to a region close to an end of the lens end electrode 12 to create a bias in the electric field distribution, thereby forming a refractive index distribution with a high refractive index and a sharp valley located at lens ends.

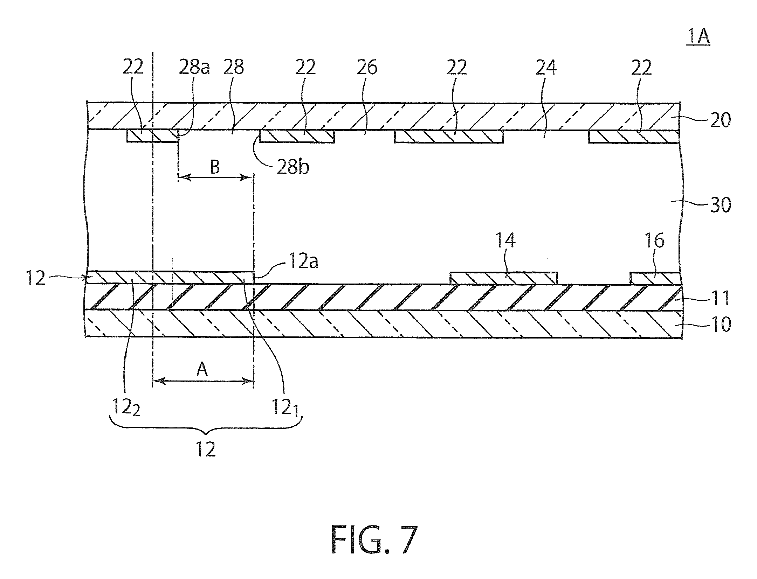

The position of the notch portion 28 will be described in detail with reference to FIG. 7, which is an enlarged view of the positional relationship between a notch portion 28 and a corresponding lens end electrode 12. When projected onto the X - Y plane, a side surface 28a of the notch portion 28, which is the closest to the lens end central axis 42, is located above one of the lens end electrode 12₁ of the Fresnel lens, which is obtained by dividing the lens end electrode 12 into two by the lens end central axis 42. A side surface 28b of the notch portion 28, which is the closest to the lens center 40, is aligned with a side surface 12a of the lens end electrode 12₁, which is the closest to the lens center 40, or located slightly to the lens center 40 side relative to the side surface 12a. The width of the lens end electrode 12₁ in the X direction is "A." That is, the distance in the X direction between the lens end central axis 42 and the side surface 12a of the lens end electrode 12₁, which is the closest to the lens center 40, is "A." The distance in the X direction between a side surface 28a of the notch portion 28, which is the closest to the lens end central axis 42, and a portion of the notch portion 28 corresponding to the side surface 12a of the lens end electrode 12₁ is "B." As in the first embodiment, it is preferable that the side surface 28a of the notch portion 28 is positioned so that the ratio B/A is 0.3 - 1.0, and it is more preferable that it is positioned so that the ratio is 0.45 - 0.9. The ratio B/A represents the ratio of the portion of the notch portion 28 overlapping the lens end electrode 12₁ to the width of the lens end electrode 12₁ when it is projected onto the X - Y plane.

If the liquid crystal optical element 1A according to the second embodiment is used instead of the liquid crystal optical element 1 shown in FIG. 2, it is possible to obtain an image display apparatus that is capable of providing a high quality display.

As can be understood from the foregoing, in the second embodiment, unlike the first embodiment, it is not necessary to provide a notch portion 24 in a region of the counter electrode 22 corresponding to the Fresnel electrode 14.

As described above, according to the second embodiment, by providing a notch portion in a region of the counter electrode corresponding to a lens end electrode of each lens, it is possible to make the shape of a valley at the discontinuous point of the refractive index distribution sharper, thereby obtaining a liquid crystal optical element and an image display apparatus that are able to provide a high quality display.

### (Third Embodiment)

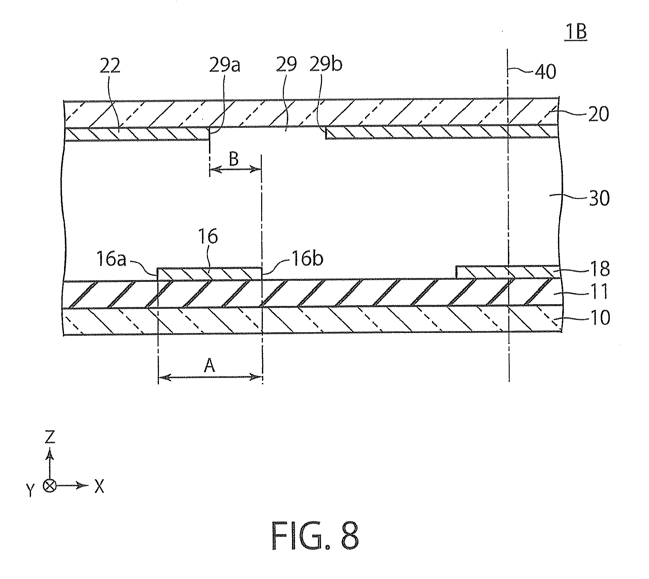

A liquid crystal optical element 1B according to a third embodiment will be described with reference to FIG. 8, which is a cross sectional view of the liquid crystal optical element 1B according to the third embodiment, near an auxiliary electrode 16. The liquid crystal optical element 1B according to the third embodiment is obtained by providing a notch portion 29 to a region of the counter electrode 22 corresponding to an auxiliary electrode 16 in the liquid crystal optical element 1 according to the first embodiment shown in FIG. 1. As in the case of the Fresnel electrode in the first embodiment, a depression is caused in the refractive index distribution due to the existence of the auxiliary electrode 16. However, by providing the notch portion 29, the occurrence of depression can be prevented.

Next, the position of the notch portion 29 will be described in detail. When projected onto the X - Y plane, a side surface 29a of the notch portion 29, which is the closest to the lens end central axis 42, is located above the auxiliary electrode 16, and a side surface 29b of the notch portion 29 on the side of the lens center 40 is aligned with a side surface 16b of the auxiliary electrode 16 on the side of the lens center 40, or is positioned to the lens center 40 side relative to the side surface 16b. The width of the auxiliary electrode 16 in the X direction is "A." That is, the distance in the X direction between the side surface 16a of the auxiliary electrode 16 on the lens end central axis side and the side surface 16b of the auxiliary electrode 16 on the lens center 40 side is "A." The distance in the X direction between the side surface 29a of the notch portion 29 on the lens end central axis and a point of the notch portion 29 corresponding to the side surface 16b of the auxiliary electrode 16 is "B," As has been described in the descriptions of the first embodiment, it is preferable that the side surface 29a of the notch portion 29 is positioned so that the ratio B/A is 0.3 - 1.0. It is more preferable that the side surface 29a is positioned so that the ratio is 0.45 - 0.9. The ratio B/A represents the ratio of the portion of the notch portion 29 overlapping the corresponding auxiliary electrode 16 to the width of the corresponding auxiliary electrode 16 when it is projected onto the X - Y plane.

If the liquid crystal optical element 1B according to the third embodiment is used instead of the liquid crystal optical element 1 shown in FIG. 2, it is possible to provide an image display apparatus that is capable of providing a high quality display.

As can be understood from the foregoing, in the third embodiment, unlike the first embodiment, it is not necessary to provide a notch portion 24 in a region of the counter electrode 22 corresponding to the Fresnel electrode 14.

As described above, according to the third embodiment, by providing a notch portion in a region of the counter electrode corresponding to an auxiliary electrode, it is possible to prevent the occurrence of depression in the refractive index distribution, thereby obtaining a liquid crystal optical element and an image display apparatus that are able to provide a high quality display.

### (Fourth Embodiment)

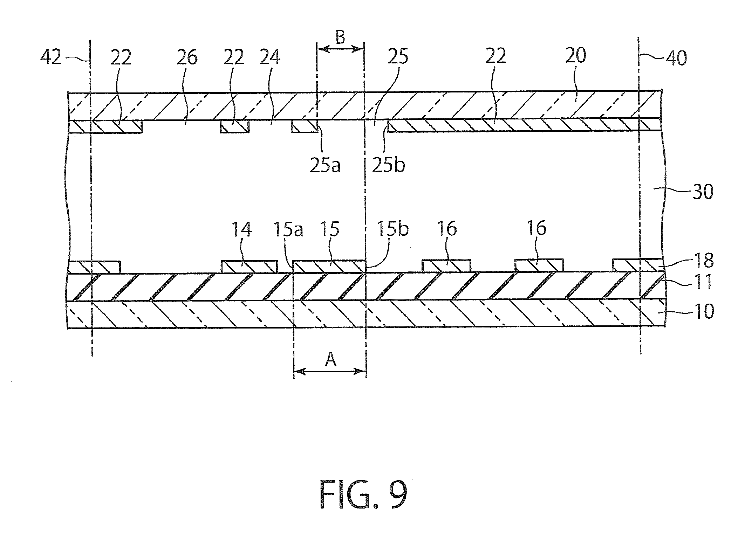

A liquid crystal optical element 1C according to a fourth embodiment will be described with reference to FIG. 9, which is a cross sectional view of the liquid crystal optical element 1C according to the fourth embodiment, near a Fresnel electrode 14. The liquid crystal optical element 1C according to the fourth embodiment is obtained by dividing the Fresnel electrode 14 of the liquid crystal optical element 1 according to the first embodiment shown in FIG. 1 into two Fresnel electrodes 14, 15, and providing notch portions 24, 25 to regions of the counter electrode 22 corresponding to the Fresnel electrodes 14, 15. Assuming that the Fresnel electrode 15 that is closer to the lens center 40 is an auxiliary electrode, this embodiment corresponds to the third embodiment. Thus, it is possible to prevent the occurrence of depression in the refractive index distribution. The position of the notch portion 24 is the same as that described in the descriptions of the first embodiment.

Next, the position of the notch portion 25 will be described in detail. When projected onto the X - Y plane, a side surface 25a of the notch portion 25, which is the closest to the lens end central axis 42, is located above the Fresnel electrode 15, and a side surface 25b of the notch portion 25, which is on the side of the lens center 40 is aligned with the side surface 15b of the Fresnel electrode 15 on the side of the lens center 40, or is positioned to the lens center 40 side relative to the side surface 15b. The width of the Fresnel electrode 15 is "A." That is, the distance in the X direction between the side surface 15a of the Fresnel electrode 15 on the side of the lens end central axis 42 and the side surface 15b of the Fresnel electrode 15 on the side of the lens center 40 in the X direction is "A." The distance in the X direction between the side surface 25a of the notch portion 25 on the side of the lens end central axis and a point of the notch portion 25 corresponding to the side surface 15b of the Fresnel electrode 15 is "B." As has been described in the descriptions of the first embodiment, it is preferable that the side surface 25a of the notch portion 25 is positioned so that the ratio B/A is 0.3 - 1.0. It is more preferable that the side surface 25a is positioned so that the ratio B/A is 0.45 - 0.9. The ratio B/A represents the ratio of the portion of the notch portion 25 overlapping the Fresnel electrode 15 to the width of the Fresnel lens 15 when it is projected onto the X - Y plane.

Incidentally, it is not necessary to provide a notch portion 24 corresponding to the Fresnel electrode 14 in the fourth embodiment.

If the liquid crystal optical element 1C according to the fourth embodiment is used instead of the liquid crystal optical element 1 shown in FIG. 2, it is possible to provide an image display apparatus that is capable of providing a high quality display.

As described above, according to the fourth embodiment, by providing a notch portion in a region of the counter electrode corresponding to the Fresnel electrode that is closer to the lens center, it is possible to prevent the occurrence of depression in the refractive index distribution, thereby obtaining a liquid crystal optical element and an image display apparatus that are able to provide a high quality display.

While certain embodiments have been described, these embodiments have been presented by way of example only, and are not intended to limit the scope of the inventions. Indeed, the novel methods and systems described herein may be embodied in a variety of other forms; furthermore, various omissions, substitutions and changes in the form of the methods and systems described herein may be made without departing from the spirit of the inventions. The accompanying claims and their equivalents are intended to cover such forms or modifications as would fail within the scope and spirit of the inventions.

## Claims

1. A liquid crystal optical element comprising:
a first substrate;
a pair of first electrodes being provided onto a first surface of the first substrate, extending in a first direction, and being arranged in a second direction that is perpendicular to the first direction;
a pair of second electrodes being provided between the pair of first electrodes on the first surface, extending in the first direction, and being arranged in the second direction;
a second substrate having a second surface facing the first surface of the first substrate;
a counter electrode being provided onto the second surface of the second substrate, and having first notch portions in regions corresponding to at least one of the pair of first electrodes and the pair of second electrodes, the first notch portions extending in the first direction; and
a liquid crystal layer provided between the first substrate and the second substrate.

2. A liquid crystal optical element according to claim 1, wherein:
each of the first notch portions is provided to a region corresponding to one of the pair of second electrodes; and
a first side surface of each of the first notch portions, the first side surface being in parallel with a first central axis, which passes through a middle point of a line connecting centers in the second direction of the first electrodes of the pair, and which is in parallel with the first direction, and the first side surface being away from the first central axis, is positioned above one of the second electrodes when the counter electrode is projected onto the first substrate from a third direction that is perpendicular to the first direction and the second direction.

3. A liquid crystal optical element according to claim 2, wherein when the counter electrode is projected onto the first substrate from the third direction, a second side surface of each of the first notch portions, the second side surface being in parallel with the first central axis and being close to the first central axis, is aligned with a first side surface of a corresponding one of the second electrodes, the first side surface of the corresponding one of the second electrodes being in parallel with the first central axis and close to the first central axis, or is closer to the first central axis than the first side surface of the corresponding one of the second electrodes.

4. A liquid crystal optical element according to claim 2, wherein when one of the first notch portions is projected onto the first substrate from the third direction, a ratio of an overlapping portion of the first notch portion to a corresponding one of the second electrodes is 0.3 - 1.0.

5. A liquid crystal optical element according to claim 4, wherein the ratio of the overlapping portion is 0.45 - 0.9.

6. A liquid crystal optical element according to claim 2, wherein the counter electrode further includes second notch portions in regions corresponding to the pair of first electrodes, the second notch portions extending in the first direction.

7. A liquid crystal optical element according to claim 6, wherein when the counter electrode is projected onto the first substrate from the third direction, a first side surface of each of the second notch portions, the first side surface being in parallel with the first central axis and away from the first central axis, is positioned between a central line in the second direction of a corresponding one of the first electrodes and a first side surface of the first electrode close to the first central axis.

8. A liquid crystal optical element according to claim 7, wherein when the counter electrode is projected onto the first substrate from the third direction, a second side surface of each of the second notch portions, the second side surface being in parallel with the first central axis and close to the first central axis, is in parallel with the first central axis and aligned with the first side surface of the corresponding one of the first electrodes, or closer to the central axis than the first side surface of the corresponding one of the first electrodes.

9. A liquid crystal optical element according to any one of the preceding claims, further comprising a plurality of third electrodes being provided between the pair of second electrodes on the first surface, extending in the first direction, and being arranged in the second direction.

10. A liquid crystal optical element according to claim 9, wherein the counter electrode includes third notch portions in regions corresponding to the third electrodes, the third notch portions extending in the first direction.

11. A liquid crystal optical element according to any one of the preceding claims, wherein the counter electrode includes a fourth notch portion between one of the first electrodes and one of the second electrodes adjacent to the one of the first electrode, the fourth notch portion extending in the first direction.

12. An image display apparatus comprising:
the liquid crystal optical element according to any one of the preceding claims; and
an image display unit on which the liquid crystal optical element is stacked, for causing light containing image information to be incident onto the liquid crystal layer to display the image.
